(19) 

Europäisches
Patentamt

European
Patent Office

Office européen
des brevets

(11) **EP 4 170 806 A1**

(12) **EUROPEAN PATENT APPLICATION**
published in accordance with Art. 153(4) EPC

(43) Date of publication:
 **26.04.2023  Bulletin 2023/17**

(21) Application number: **21883211.1**

(22) Date of filing: **19.10.2021**

(51) International Patent Classification (IPC):
 $H01M\ 50/431^{(2021.01)}$   $H01M\ 50/446^{(2021.01)}$
 $H01M\ 50/449^{(2021.01)}$   $H01M\ 10/058^{(2010.01)}$
 $H01M\ 10/052^{(2010.01)}$

(52) Cooperative Patent Classification (CPC):
 H01M 10/052; H01M 10/058; H01M 50/431;
 H01M 50/446; H01M 50/449; Y02E 60/10;
 Y02P 70/50

(86) International application number:
 **PCT/KR2021/014630**

(87) International publication number:
 **WO 2022/086142 (28.04.2022 Gazette 2022/17)**

(84) Designated Contracting States:
 **AL AT BE BG CH CY CZ DE DK EE ES FI FR GB
 GR HR HU IE IS IT LI LT LU LV MC MK MT NL NO
 PL PT RO RS SE SI SK SM TR**
 Designated Extension States:
 **BA ME**
 Designated Validation States:
 **KH MA MD TN**

(30) Priority: **19.10.2020  KR 20200135562**

(71) Applicants:
 • **LG Energy Solution, Ltd.
 Seoul 07335 (KR)**
 • **UNIST (Ulsan National Institute of Science
 and Technology)
 Ulsan 44919 (KR)**

(72) Inventors:
 • **HAN, Da-Kyung
 Daejeon 34122 (KR)**
 • **LEE, Sang-Young
 Ulju-gun, Ulsan 44919 (KR)**
 • **SEO, Ji-Young
 Ulju-gun, Ulsan 44919 (KR)**
 • **LEE, Yong-Hyeok
 Ulju-gun, Ulsan 44919 (KR)**
 • **LEE, Je-An
 Daejeon 34122 (KR)**
 • **JEONG, So-Mi
 Daejeon 34122 (KR)**

(74) Representative: **Hoffmann Eitle
 Patent- und Rechtsanwälte PartmbB
 Arabellastraße 30
 81925 München (DE)**

(54) **SEPARATOR AND LITHIUM SECONDARY BATTERY COMPRISING SAME**

(57)    The present disclosure relates to a separator including: a porous polymer substrate; a porous coating layer formed on at least one surface of the porous polymer substrate, and including a plurality of inorganic particles and a first binder polymer disposed totally or partially on the surfaces of the inorganic particles so that the inorganic particles may be interconnected and fixed; and a conductive coating layer formed on one surface of the porous coating layer and including single-walled carbon nanotubes (SWCNTs) and a second binder polymer.

FIG. 1

**Description**

TECHNICAL FIELD

The present application claims priority to Korean Patent Application No. 10-2020-0135562 filed on October 19, 2020 in the Republic of Korea. The present disclosure relates to a separator and a lithium secondary battery including the same.

BACKGROUND ART

Due to the high growth of electric vehicle market, lithium secondary batteries including a high-energy cell has been increasingly in demand. Therefore, batteries using a high-loading electrode (5 mAh/cm$^2$ or more, based on electrode area) have been developed.

Such a lithium secondary battery includes a separator interposed between a positive electrode and a negative electrode in order to prevent a physical contact and electrical short-circuit between the positive electrode and the negative electrode. Such a separator frequently uses a polyolefin-based porous polymer substrate, and a separator provided with a porous coating layer, containing inorganic particles and a binder polymer, on at least one surface of the porous polymer substrate is used frequently in order to prevent the porous polymer substrate from heat shrinking and to enhance the adhesion to an electrode.

However, when applying commercially available separators to batteries using high-loading electrodes, it is difficult to ensure high-rate discharge characteristics and output/life characteristics.

DISCLOSURE

Technical Problem

The present disclosure is designed to solve the problems of the related art, and therefore the present disclosure is directed to improving lithium ion and electron transport rate by coating the surface of a porous coating layer with a conductive material. In this manner, it is possible to improve high-rate discharge characteristics and output characteristics.

Technical Solution

In one aspect of the present disclosure, there is provided a separator for a lithium secondary battery according to any one of the following embodiments.

According to the first embodiment, there is provided a separator for a lithium secondary battery, including:

a porous polymer substrate;
a porous coating layer formed merely on the first surface of the porous polymer substrate or formed on both the first surface and the second surface of the porous polymer substrate, and including a plurality of inorganic particles and a first binder polymer disposed totally or partially on the surfaces of the inorganic particles so that the inorganic particles may be interconnected and fixed; and
a conductive coating layer formed on the first surface of the porous coating layer and including a conductive material and a second binder polymer,
wherein the loading amount of the conductive material in the conductive coating layer is 0.01-0.5 g/m$^2$, and
the conductive material includes single-walled carbon nanotubes (SWCNTs) in an amount of 90 wt% or more based on 100 wt% of the conductive material.

According to the second embodiment, there is provided the separator for a lithium secondary battery as defined in the first embodiment, wherein the conductive material includes single-walled carbon nanotubes (SWCNTs) in an amount of 99 wt% or more based on 100 wt% of the conductive material.

According to the third embodiment, there is provided the separator for a lithium secondary battery as defined in the first or the second embodiment, wherein the conductive coating layer is a thin film and has a thickness of 2 μm or less.

According to the fourth embodiment, there is provided the separator for a lithium secondary battery as defined in any one of the first to the third embodiments, wherein the single-walled carbon nanotubes have a diameter of 0.1-10 nm.

According to the fifth embodiment, there is provided the separator for a lithium secondary battery as defined in any one of the first to the fourth embodiments, wherein each of the first binder and the second binder independently is any one selected from the group consisting of polyvinylidene fluoride-co-hexafluoropropylene, polyvinylidene fluoride-co-trichloroethylene, polymethyl methacrylate, polyethylhexyl acrylate, polybutyl acrylate, polyacrylonitrile, polyvinyl pyrrolidone, polyvinyl acetate, polyethylene-co-vinyl acetate, polyethylene oxide, polyarylate, cellulose acetate, cellulose acetate butyrate, cellulose acetate propionate, cyanoethylpullulan, cyanoethylpolyvinyl alchol, cyanoethyl cellulose, cyanoethyl sucrose, pullulan, and carboxymethyl cellulose, or a mixture of two or more of them.

According to the sixth embodiment, there is provided the separator for a lithium secondary battery as defined in any one of the first to the fifth embodiments, wherein the conductive coating layer further includes a particle-type binder polymer.

According to the seventh embodiment, there is provided the separator for a lithium secondary battery as defined in the sixth embodiment, wherein the particle-type binder polymer has a glass transition temperature of 80°C or less.

According to the eighth embodiment, there is provided the separator for a lithium secondary battery as defined in the sixth embodiment, wherein the particle-type binder polymer has an average diameter (D50) of 100-500 nm.

According to the ninth embodiment, there is provided the separator for a lithium secondary battery as defined in the sixth embodiment, wherein the particle-type binder polymer includes any one selected from the group consisting of styrene butadiene rubber (SBR), acrylonitrile-butadiene rubber, acrylonitrile-butadiene-styrene rubber, acrylic copolymer, polyacrylonitrile, polyvinyl chloride, polyvinylidene fluoride, polyvinyl alcohol, polystyrene and polycyanoacrylate, or a mixture of two or more of them.

According to the tenth embodiment, there is provided the separator for a lithium secondary battery as defined in any one of the first to the ninth embodiments, wherein the weight ratio of the conductive material to the second binder polymer is 40 : 60-99 : 1.

According to the eleventh embodiment, there is provided the separator for a lithium secondary battery as defined in any one of the first to the tenth embodiments, wherein the porous coating layer has a thickness of 1-10 $\mu$m.

In another aspect of the present disclosure, there is provided a lithium secondary battery according to any one of the following embodiments.

According to the twelfth embodiment, there is provided a lithium secondary battery including a positive electrode, a negative electrode and a separator interposed between the positive electrode and the negative electrode, wherein the separator is the same as defined in any one of the first to the eleventh embodiments, and the conductive coating layer in the separator faces the positive electrode.

According to the thirteenth embodiment, there is provided the lithium secondary battery as defined in the twelfth embodiment, wherein the positive electrode is a high-loading positive electrode having a positive electrode active material loading amount of 5 mAh/cm$^2$ or more.

Advantageous Effects

Since the separator for a lithium secondary battery according to an embodiment of the present disclosure includes a conductive coating layer, it is possible to improve the electroconductivity and to ensure the ion conductivity of the separator.

In addition, since the conductive coating layer includes a binder polymer, it is possible to improve the adhesion between the separator and an electrode.

DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing. Meanwhile, shapes, sizes, scales or proportions of some constitutional elements in the drawings may be exaggerated for the purpose of clearer description.

FIG. 1 is a scanning electron microscopic (SEM) image illustrating the slurry dispersion for forming a single-walled carbon nanotube conductive coating layer prepared according to an embodiment of the present disclosure.

FIG. 2 is an SEM image illustrating the slurry dispersion for forming a multi-walled carbon nanotube conductive coating layer prepared according to Comparative Example.

FIG. 3 is a graph illustrating the electroconductivity of each of the separators according to an embodiment of the present disclosure and Comparative Example depending on carbon nanotube coating amount.

FIG. 4 is an SEM image illustrating the surface of the separator having a conductive coating layer according to Example 6.

FIG. 5 is an SEM image illustrating the surface of the separator having a conductive coating layer according to Comparative Example 6.

FIG. 6 is a schematic sectional view illustrating the separator according to an embodiment of the present disclosure.

BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

Throughout the specification, the expression 'a part includes an element' does not preclude the presence of any additional elements but means that the part may further include the other elements.

As used herein, the terms 'about', 'substantially', or the like, are used as meaning contiguous from or to the stated numerical value, when an acceptable preparation and material error unique to the stated meaning is suggested, and are used for the purpose of preventing an unconscientious invader from unduly using the stated disclosure including an accurate or absolute numerical value provided to help understanding of the present disclosure.

As used herein, the expression 'A and/or B' means 'A, B or both of them'.

Specific terms used in the following description are for illustrative purposes and are not limiting. Such terms as 'right', 'left', 'top surface' and 'bottom surface' show the directions in the drawings to which they are referred. Such terms as 'inwardly' and 'outwardly' show the direction toward the geometrical center of the corresponding apparatus, system and members thereof and the direction away from the same, respectively. 'Front', 'rear', 'top' and 'bottom' and related words and expressions show the positions and points in the drawings to which they are referred and should not be limiting. Such terms include the above-listed words, derivatives thereof and words having similar meanings.

In an electrochemical device, such as a lithium secondary battery, a separator generally uses a porous polymer substrate, and thus shows a heat shrinking behavior undesirably. Therefore, a porous coating layer has been introduced in order to reduce the heat shrinkage of the separator.

However, when applying a currently used separator to a battery using a high-loading electrode, it is difficult to ensure high-rate discharge characteristics and output/life characteristics.

To solve the above-mentioned problems, the present disclosure is directed to improving lithium ion and electron transport rate by coating the surface of a porous coating layer with a conductive material. In this manner, it is possible to improve high-rate discharge characteristics and output characteristics.

In one aspect of the present disclosure, there is provided a separator for a lithium secondary battery, including:

a porous polymer substrate;

a porous coating layer formed merely on the first surface of the porous polymer substrate or formed on both the first surface and the second surface of the porous polymer substrate, and including a plurality of inorganic particles and a first binder polymer disposed totally or partially on the surfaces of the inorganic particles so that the inorganic particles may be interconnected and fixed; and

a conductive coating layer formed on the first surface of the porous coating layer and including a conductive material and a second binder polymer,

wherein the loading amount of the conductive material in the conductive coating layer is 0.01-0.5 g/m$^2$, and the conductive material includes single-walled carbon nanotubes (SWCNTs) in an amount of 90 wt% or more based on 100 wt% of the conductive material.

In addition, the loading amount of the conductive material in the conductive coating layer is 0.01-0.5 g/m$^2$, and the conductive material includes single-walled carbon nanotubes (SWCNTs) in an amount of 90 wt% or more based on 100 wt% of the conductive material. Preferably, the content of SWCNT is 99 wt% or more based on 100 wt% of the conductive material.

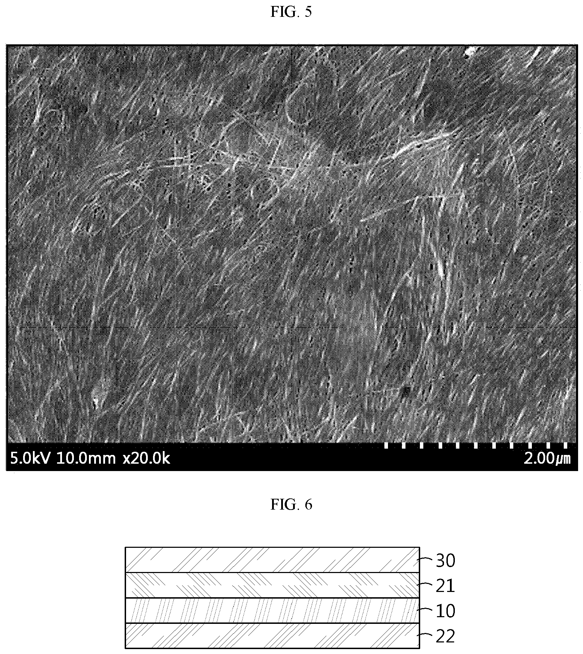

According to an embodiment of the present disclosure, the separator includes a porous polymer substrate and a conductive coating layer, wherein the conductive coating layer is disposed on the outermost surface of any one of both surfaces of the separator, and the porous coating layer is disposed between the conductive coating layer and the porous polymer substrate. Meanwhile, according to another embodiment of the present disclosure, the separator may include a porous coating layer disposed on the surface of the porous polymer substrate having no conductive coating layer disposed thereon. FIG. 6 is a schematic sectional view illustrating the separator according to an embodiment of the present disclosure. Referring to FIG. 6, a first porous coating layer 21 and a conductive coating layer 30 are disposed successively on the first surface 10a of a porous substrate 10, a second porous coating layer 22 is disposed on the second surface 10b of the porous substrate, and no conductive coating layer is formed on the surface of the second porous coating layer.

As described hereinafter, when applying the separator according to the present disclosure to a battery, the conductive coating layer may be disposed in such a manner that it may face a positive electrode.

Carbon nanotubes (CNTs) are tubular advanced materials including carbon, and are fine carbon compounds having a nanometer (nm)-scaled diameter. Carbon nanotubes become conductors or semi-conductors depending on size.

Such carbon nanotubes have a single-walled structure or a multi-walled structure. Herein, multi-walled carbon nanotubes (MWCNTs) are carbon structures having a plurality of tubes forming concentric circles as viewed from the outside, and include a multi-walled structure formed by multiple overlapped carbon layers, unlike single-walled carbon nanotubes, as viewed from the sectional shape at any one point. On the contrary, single-walled carbon nanotubes have a structure including one tube forming a concentric circle.

The inventors of the present disclosure have conducted intensive studies to solve the above-mentioned problems by coating single-walled carbon nanotubes on the surface of a porous coating layer.

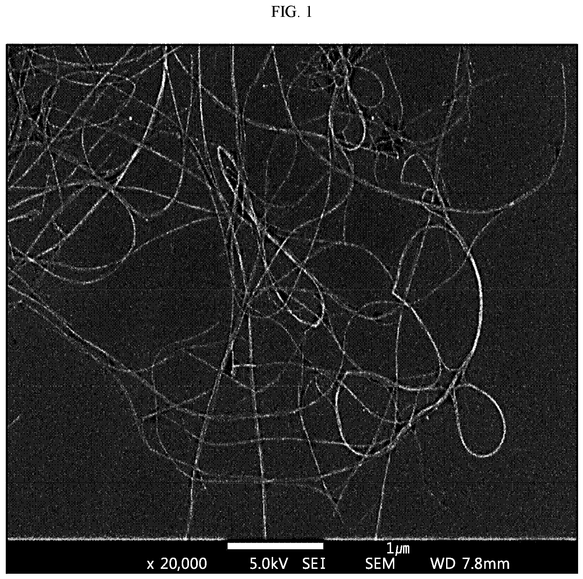

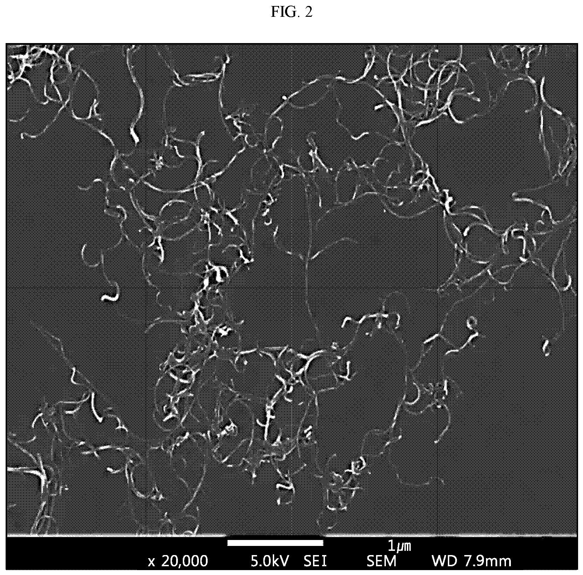

As can be seen from FIG. 2, multi-walled carbon nanotubes are problematic in that most of them are cut during the preparation of slurry. On the other hand, as can be seen from FIG. 1, single-walled carbon nanotubes maintain a large fiber length without cutting of carbon nanotubes. Thus, when applying single-walled carbon nanotubes to a porous coating layer, followed by drying, connection among the fibers is retained well to improve the cell performance.

It is thought that the reason why single-walled carbon nanotubes having one wall maintain a larger fiber length as compared to multi-walled carbon nanotubes is that the single wall has higher flexibility.

In addition, it is thought that single-walled carbon nanotubes have a significantly small diameter of several nanometers, but have a higher graphitization degree as compared to multi-walled carbon nanotubes and are free from structural defects so that they may be grown in the type of a bundle and may undergo debundling upon the preparation of dispersion slurry, while maintaining a large fiber length without cutting of fibers.

According to an embodiment of the present disclosure, the loading amount of single-walled carbon nanotubes is 0.01-0.5 $g/m^2$, preferably. The content of single-walled carbon nanotubes is based on the area ($m^2$) of the conductive coating layer. When the conductive coating layer has the same area as the separator as shown in FIG. 6, the content of single-walled carbon nanotubes may be expressed as the content per unit area of the separator. As the content of single-walled carbon nanotubes is increased, electroconductivity is increased. However, when an excessively high content of single-walled carbon nanotubes is used, the pores of the coating layer surface may be blocked to cause an increase in air permeability to several thousands of seconds/100 cc or higher and degradation of ion conductivity undesirably. Therefore, the content of single-walled carbon nanotubes is controlled preferably to the above-defined range.

According to an embodiment of the present disclosure, the single-walled carbon nanotubes may have a diameter of 0.1 nm or more, 0.2 nm or more, or 0.5 nm or more, and 10 nm or less, 9 nm or less, 8 nm or less, or 7 nm or less.

The conductive coating layer includes a second binder polymer.

The second binder polymer may be one used conventionally for forming a porous coating layer in the art. Particularly, a polymer having a glass transition temperature ($T_g$) of -200 to 200°C may be used. This is because such a polymer can improve the mechanical properties, such as flexibility and elasticity, of the finally formed porous coating layer. Such a binder polymer functions as a binder which interconnects the inorganic particles with one another and stably fixes them, and thus contributes to prevention of degradation of mechanical properties of a separator having a porous coating layer.

In addition, it is not essentially required for the binder polymer to have ion conductivity. However, when using a polymer having ion conductivity, it is possible to further improve the performance of an electrochemical device. Therefore, a binder polymer having a dielectric constant as high as possible may be used. In fact, since the dissociation degree of a salt in an electrolyte depends on the dielectric constant of the solvent for the electrolyte, a binder polymer having a higher dielectric constant can improve the salt dissociation degree in an electrolyte. The binder polymer may have a dielectric constant ranging from 1.0 to 100 (measured at a frequency of 1 kHz), particularly 10 or more.

In addition to the above-mentioned function, the binder polymer may be characterized in that it is gelled upon the impregnation with a liquid electrolyte and thus shows a high degree of swelling. Thus, the binder polymer has a solubility parameter (i.e., Hildebrand solubility parameter) of 15-45 $MPa^{1/2}$ or 15-25 $MPa^{1/2}$ and 30-45 $MPa^{1/2}$. Therefore, hydrophilic polymers having many polar groups may be used more frequently as compared to hydrophobic polymers, such as polyolefins. When the solubility parameter is less than 15 $MPa^{1/2}$ and more than 45 $MPa^{1/2}$, it is difficult for the binder polymer to be swelled with a conventional liquid electrolyte for a battery.

Non-limiting examples of the binder polymer include but are not limited to: polyvinylidene fluoride-co-hexafluoropropylene, polyvinylidene fluoride-co-trichloro ethylene, polymethyl methacrylate, polyethylhexyl acrylate, polybutyl acrylate, polyacrylonitrile, polyviny1 pyrrolidone, polyvinyl acetate, polyethylene-co-vinyl acetate, polyethylene oxide, polyarylate, cellulose acetate, cellulose acetate butyrate, cellulose acetate propionate, cyanoethylpullulan, cyanoethylpolyvinylalchol, cyanoethyl cellulose, cyanoethyl sucrose, pullulan, carboxymethyl cellulose, or the like.

According to an embodiment of the present disclosure, when using an aqueous solvent, polyvinyl pyrrolidone may be used as the second binder polymer to increase the dispersibility of the inorganic particles.

According to an embodiment of the present disclosure, when using a non-aqueous solvent, a fluorine-based binder polymer may be used as the second binder polymer to increase the dispersibility of the inorganic particles.

Herein, the weight ratio of the single-walled carbon nanotubes to the second binder polymer may be 40 : 60-99 : 1, particularly 70 : 30-95 : 5. When the weight ratio of the single-walled carbon nanotubes to the second binder polymer satisfies the above-defined range, it is possible to prevent the problem of a decrease in pore size and porosity of the resultant conductive coating layer, caused by an increase in content of the binder polymer. It is also possible to solve the problem of degradation of peeling resistance of the resultant coating layer, caused by a decrease in content of the binder polymer, and to reduce the problem of degradation of coatability, caused by a decrease in dispersibility with the single-walled carbon nanotubes.

The conductive coating layer is a thin film, and for example, may have a thickness of 2 $\mu$m or less, or 1 $\mu$m or less. When the thickness of the conductive layer is larger than 2 $\mu$m, the loading amount of slurry for forming a conductive coating layer is excessively high to cause an increase in resistance.

Herein, the conductive coating layer may further include a particle-type binder polymer.

According to an embodiment of the present disclosure, the particle-type binder polymer may have a glass transition temperature of 80°C or less.

According to an embodiment of the present disclosure, the particle-type binder polymer may have an average diameter (D50) of 100-500 nm.

Within the above-defined range, in the conductive coating layer, the particle-type binder polymer may be dispersed better among the single-walled carbon nanotubes. Therefore, electroconductivity is increased and adhesion to an electrode may be further improved.

Particular examples of the particle-type binder polymer may include any one selected from the group consisting of styrene butadiene rubber (SBR), acrylonitrile-butadiene rubber, acrylonitrile-butadiene-styrene rubber, acrylic copolymer, polyacrylonitrile, polyvinyl chloride, polyvinylidene fluoride, polyvinyl alcohol, polystyrene and polycyanoacrylate, or a mixture of two or more of them.

When the conductive coating layer further includes a particle-type binder polymer, it may have a structure including the particle-type binder polymer dispersed among the single-walled carbon nanotubes. Therefore, electroconductivity is increased and adhesion to an electrode may be further improved.

According to an embodiment of the present disclosure, the porous coating layer includes inorganic particles and a first binder polymer.

According to the present disclosure, the inorganic particles are not particularly limited, as long as they are electrochemically stable. In other words, the inorganic particles are not particularly limited, as long as they cause no oxidation and/or reduction in the operating voltage range (e.g. 0-5 V based on Li/Li$^+$) of an applicable electrochemical device. Particularly, when using inorganic particles having a high dielectric constant, they contribute to an increase in dissociation degree of the electrolyte salt, particularly lithium salt, in a liquid electrolyte, and thus can improve ion conductivity of the electrolyte.

For these reasons, the inorganic particles may include inorganic particles having a dielectric constant of 5 or more, inorganic particles capable of transporting lithium ions and a mixture thereof.

The inorganic particles having a dielectric constant of 5 or more may be at least one selected from the group consisting of $Al_2O_3$, $SiO_2$, $ZrO_2$, $AlO(OH)$, $TiO_2$, $BaTiO_3$, $Pb(Zr_xTi_{1-x})O_3$ (PZT, wherein 0 < x < 1), $Pb_{1-x}La_xZr_{1-y}Ti_yO_3$ (PLZT, wherein 0 < x < 1, 0 < y < 1), $(1-x)Pb(Mg_{1/3}Nb_{2/3})O_3$-$xPbTiO_3$ (PMN-PT, wherein 0 < x < 1), hafnia ($HfO_2$), $SrTiO_3$, $SnO_2$, $CeO_2$, $MgO$, $NiO$, $CaO$, $ZnO$ and $SiC$, or a mixture of two or more of them.

The inorganic particles capable of transporting lithium ions may be at least one selected from the group consisting of lithium phosphate ($Li_3PO_4$), lithium titanium phosphate ($Li_xTi_y(PO_4)_3$, 0 < x <2, 0 < y < 3), lithium aluminum titanium phosphate ($Li_xAl_yTi_z(PO_4)_3$, 0 < x < 2, 0 < y < 1, 0 < z < 3), (LiAlTiP)$_x$O$_y$-based glass (1 < x < 4, 0 < y < 13), lithium lanthanum titanate ($Li_xLa_yTiO_3$, 0 < x < 2, 0 < y < 3), lithium germanium thiophosphate ($Li_xGe_yP_zS_w$, 0 < y < 1, 0 < z < 1, 0 < w < 5), lithium nitride ($Li_xN_y$, 0 < x < 4, 0 < y < 2), $SiS_2$-based glass ($Li_xSi_yS_z$, 0 < x < 3, 0 < y < 2, 0 < z < 4) and $P_2S_5$-based glass ($Li_xP_yS_z$, 0 < x < 3, 0 < y < 3, 0 < z < 7), or a mixture of two or more of them.

Although the average particle diameter of the inorganic particles is not particularly limited, the inorganic particles may preferably have an average particle diameter of 0.001-10 $\mu$m, more preferably 100 nm to 2 $\mu$m, and most preferably 150 nm to 1 $\mu$m, in order to form a porous coating layer having a uniform thickness and to provide suitable porosity.

The inorganic particles may be added after they are pulverized in advance to a predetermined average particle diameter. Otherwise, the inorganic particles may be added to the binder polymer solution, and then pulverized and dispersed while controlling them to have a predetermined average particle diameter by using a ball milling process, or the like.

The weight ratio of the inorganic particles to the first binder polymer may be 90 : 10-50 : 50. When the weight ratio of the inorganic particles to the first binder polymer satisfies the above-defined range, it is possible to prevent the problem of a decrease in pore size and porosity of the resultant conductive coating layer, caused by an increase in content of the first binder polymer. It is also possible to solve the problem of degradation of peeling resistance of the resultant coating layer, caused by a decrease in content of the first binder polymer

According to an embodiment of the present disclosure, reference will be made to the above description about the second binder polymer with reference to the first binder polymer.

Herein, the first binder polymer may be the same as or different from the second binder polymer.

According to an embodiment of the present disclosure, the porous coating layer may have a thickness of 1-10 $\mu$m.

According to the present disclosure, the porous polymer substrate is a porous membrane and can provide a channel for transporting lithium ions, while insulating the negative electrode and the positive electrode electrically from each other to prevent a short-circuit. Any material may be used with no particular limitation, as long as it may be used conventionally as a material for a separator of an electrochemical device.

Particularly, the porous polymer substrate may be a porous polymer film substrate or a porous polymer nonwoven web substrate.

The porous polymer film substrate may be a porous polymer film including polyolefin, such as polyethylene or polypropylene. Such a polyolefin porous polymer film substrate realizes a shut-down function at a temperature of 80-150°C.

Herein, the polyolefin porous polymer film may be formed of polymers including polyolefin polymers, such as polyethylene, including high-density polyethylene, linear low-density polyethylene, low-density polyethylene or ultrahigh-molecular weight polyethylene, polypropylene, polybutylene, or polypentene, alone or in combination of two or more of them.

In addition, the porous polymer film substrate may be obtained by molding various polymers, such as polyesters, other than polyolefins, into a film shape. Further, the porous polymer film substrate may have a stacked structure of two or more film layers, wherein each film layer may be formed of polymers including the above-mentioned polymers, such as polyolefins or polyesters, alone or in combination of two or more of them.

In addition, the porous polymer film substrate and porous polymer nonwoven web substrate may be formed of polyethylene terephthalate, polybutylene terephthalate, polyester, polyacetal, polyamide, polycarbonate, polyimide, polyetherether ketone, polyether sulfone, polyphenylene oxide, polyphenylene sulfide, or polyethylene naphthalene, alone or in combination, besides the above-mentioned polyolefins.

Although there is no particular limitation in the thickness of the porous polymer substrate, the porous polymer substrate has a thickness of 1-100 $\mu$m, particularly 5-50 $\mu$m. As the batteries have been provided with high output/high capacity recently, it is advantageous to use a thin film as a porous polymer substrate. The pores present in the porous polymer substrate may have a dimeter of 10-100 nm, 10-70 nm, 10-50 nm, or 10-35 nm, and a porosity of 5-90%, preferably 20-80%. However, according to the present disclosure, such numerical ranges may be changed with ease according to a particular embodiment, or as necessary.

The pores of the porous polymer substrate may include several types of pore structures. When any one of the average pore size determined by using a porosimeter and the average pore size observed through field emission-scanning electron microscopy (FE-SEM) satisfies the above-defined range, it falls within the scope of the present disclosure.

Herein, in the case of a generally known monoaxially oriented dry separator, the median pore size in the pore size of the transverse direction (TD), not the pore size of the machine direction (MD), determined through FE-SEM is taken as the standard pore size. In the case of the other porous polymer substrates (e.g. wet polyethylene (PE) separator) having a network structure, the pore size measured by using a porosimeter is taken as the standard pore size.

The separator for a lithium secondary battery according to an embodiment of the present disclosure may be obtained by using a conventional method known to those skilled in the art. According to an embodiment of the present disclosure, the separator may be obtained by applying slurry for forming a porous coating layer including inorganic particles dispersed in a polymer solution containing the first binder polymer dissolved in a solvent to a porous substrate, followed by drying, to form a porous coating layer. The porous coating layer may be formed merely on one surface of the separator substrate or on both surfaces of the separator substrate. The solvent used herein preferably has a solubility parameter similar to the solubility of the first binder polymer and a low boiling point. This is because such a solvent allows homogeneous mixing and may be removed with ease subsequently. Non-limiting examples of the solvent include any one selected from the group consisting of water, acetone, tetrahydrofuran, methylene chloride, chloroform, dimethyl formamide, N-methyl-2-pyrrolidone (NMP) and cyclohexane, or a mixture of two or more of them.

The inorganic particles may be dispersed by using a method generally known to those skilled in the art. For example, a ball mill, a bead mill, a disperser, a mixer, or the like may be used. Particularly, ball milling or bead milling processes are preferred. Herein, the dispersion treatment time may vary with the volume of particles, but may be 1-20 hours suitably. In addition, the particle size of the pulverized inorganic particles may be controlled through the size of the beads used for ball milling or bead milling and ball milling (bead milling) time.

Although there is no particular limitation in the process for coating the slurry for forming a porous coating layer onto the porous polymer substrate, it is preferred to use a slot coating or dip coating process. A slot coating process includes coating a composition supplied through a slot die onto the whole surface of a substrate and is capable of controlling the thickness of a coating layer depending on the flux supplied from a metering pump. In addition, a dip coating process includes dipping a substrate into a tank containing a composition to carry out coating and is capable of controlling the thickness of a coating layer depending on the concentration of the composition and the rate of removing the substrate from the tank. Further, in order to control the coating thickness more precisely, it is possible to carry out post-metering through a Mayer bar or the like, after dipping.

Then, the porous polymer substrate coated with the slurry for forming a porous coating layer may be dried in a dryer, such as an oven, to form a porous coating layer on at least one surface of the porous polymer substrate.

The drying may be carried out in a drying chamber, wherein the condition of the drying chamber is not particularly limited due to the application of a non-solvent.

The drying step may be carried out under a relative humidity of 30% or more, 35% or more, or 40% or more, and 80% or less, 75% or less, or 70% or less. For example, the drying step may be carried out under a relative humidity of 40-80%. In addition, the drying step may be carried out at a temperature of 20-70°C for 0.1-2 minutes.

In the porous coating layers, the inorganic particles are bound to one another by the first binder polymer, while they are packed and are in contact with one another, thereby forming interstitial volumes among the inorganic particles, and the interstitial volumes among the inorganic particles become vacant spaces to form pores.

In other words, the first binder polymer attaches the inorganic particles to one another so that they may retain their binding states, and for example, the first binder polymer connects the inorganic particles with one another and fixes them. In addition, the pores of the porous coating layer are those formed by the interstitial volumes among the inorganic particles which become vacant spaces. The spaces may be defined by the inorganic particles facing each other substantially in a closely packed or densely packed structure of the inorganic particles.

The separator according to an embodiment of the present disclosure may further include other additives, besides the inorganic particles and the first binder polymer.

Then, the conductive coating layer may be formed on the surface of the porous coating layer. As described above, the conductive coating layer may be formed merely on one surface of both surfaces of the separator. In other words, when porous coating layers are formed on both surfaces of the separator substrate, the conductive coating layer is formed merely on the surface of one porous coating layer of both porous coating layers. Meanwhile, when a porous coating layer is formed merely on one surface of both surfaces of the separator, the conductive coating layer is formed on the corresponding surface.

For example, the conductive coating layer may be formed by applying slurry for forming a conductive coating layer including single-walled carbon nanotubes as a conductive material and the second binder polymer, dissolved or dispersed in a solvent, followed by drying. Although there is no particular limitation in the method for forming a conductive coating layer, it is preferred to use slot die coating, since the conductive coating layer is formed merely on one surface.

In another aspect of the present disclosure, there is provided a lithium secondary battery including a positive electrode, a negative electrode and a separator interposed between the positive electrode and the negative electrode, wherein the separator is the above-described separator according to an embodiment of the present disclosure.

Meanwhile, the conductive coating layer of the separator may face the positive electrode.

The electrochemical device includes any device which carries out electrochemical reaction, and particular examples thereof include all types of primary batteries, secondary batteries, fuel cells, solar cells or capacitors, such as super capacitor devices. Particularly, among the secondary batteries, lithium secondary batteries, including lithium metal secondary batteries, lithium-ion secondary batteries, lithium polymer secondary batteries or lithium-ion polymer secondary batteries, are preferred.

The electrodes used in combination with the separator according to the present disclosure are not particularly limited, and may be obtained by allowing electrode active materials to be bound to an electrode current collector through a method generally known in the art. Among the electrode active materials, non-limiting examples of a positive electrode active material include conventional positive electrode active materials that may be used for the positive electrodes for conventional electrochemical devices. Particularly, lithium manganese oxides, lithium cobalt oxides, lithium nickel oxides, lithium iron oxides or lithium composite oxides containing a combination thereof are used preferably.

Particularly, the positive electrode material may include active material particles of any one selected from the group consisting of $LiCoO_2$, $LiNiO_2$, $LiMn_2O_4$, $LiCoPO_4$, $LiFePO_4$ and $LiNi_{1-x-y-z}Co_xM1_yM2_zO_2$ (wherein each of M1 and M2 independently represents any one selected from the group consisting of Al, Ni, Co, Fe, Mn, V, Cr, Ti, W, Ta, Mg and Mo, each of x, y and z independently represents the atomic fraction of each of the elements forming oxide, and $0 \leq x < 0.5$, $0 \leq y < 0.5$, $0 \leq z < 0.5$ and $0 < x + y + z \leq 1$), or a mixture of two or more of them. According to an embodiment of the present disclosure, the positive electrode active material may include lithium cobalt oxide and/or lithium nickel cobalt manganese oxide.

Meanwhile, according to an embodiment of the present disclosure, the positive electrode may have a positive electrode active material loading amount of 5 mAh/cm$^2$ or more. The content of the positive electrode active material is based on the area (cm$^2$) of the positive electrode, preferably, the area of the positive electrode active material layer.

Non-limiting examples of the negative electrode active material include conventional negative electrode active materials that may be used for the negative electrodes for conventional electrochemical devices. Particular examples of the negative electrode active material include lithium-intercalating materials, such as lithium metal or lithium alloys, carbon, petroleum coke, activated carbon, graphite or other carbonaceous materials. Non-limiting examples of the positive electrode current collector include foil made of aluminum, nickel or a combination thereof. Non-limiting examples of the negative electrode current collector include foil made of copper, gold, nickel, copper alloys or a combination thereof.

The electrolyte that may be used in the electrochemical device according to the present disclosure is a salt having a structure of A$^+$B$^-$, wherein A$^+$ includes an alkali metal cation such as Li$^+$, Na$^+$, K$^+$ or a combination thereof, and B$^-$ includes an anion such as PF$_6^-$, BF$_4^-$, Cl$^-$, Br$^-$, I$^-$, COO$_4^-$, AsF$_6^-$, CH$_3$CO$_2^-$, CF$_3$SO$_3^-$, N(CF$_3$SO$_2$)$_2^-$, C(CF$_2$SO$_2$)$_3^-$ or a combination thereof, the salt being dissolved or dissociated in an organic solvent including propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma-butyrolactone ($\gamma$-butyrolactone) or a combination thereof. However, the present disclosure is not limited thereto.

Injection of the electrolyte may be carried out in an adequate step during the process for manufacturing a battery depending on the manufacturing process of a final product and properties required for a final product. In other words, injection of the electrolyte may be carried out before the assemblage of a battery or in the final step of the assemblage of a battery.

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

### Test Example 1

### Comparative Example 1

First, polyvinylidene fluoride-co-hexafluoropropylene (PVDF-HFP) as a first binder polymer was introduced to acetone as a solvent and dissolved therein at 50°C for about 4 hours to prepare a binder polymer solution. Next, aluminum trihydroxide (Al(OH)$_3$) as inorganic particles (particle size: 900 nm) were introduced to the binder polymer solution. Then, cyano resin (weight average molecular weight: 400,000) as a dispersant and liquid fatty acid (P104 available from BYT Co.) were introduced thereto. Herein, the weight ratio of the inorganic particles : first binder polymer : cyano resin : fatty acid was controlled to 73 : 25 : 1 : 1 to prepare slurry for forming a porous coating layer. Herein, the slurry had a solid content (slurry free from the solvent) of 16 parts by weight based on 100 parts by weight of the slurry.

The slurry for forming a porous coating layer was applied to both surfaces of a polyethylene porous film (porosity 45%) through a dip coating process and dried under the condition of a relative humidity of 45% at 23°C to obtain a separator having porous coating layers each having a thickness of 3 $\mu$m. The test results of the separator are shown in the following Table 1 and Table 2.

### Example 1

A conductive coating layer was formed on the porous coating layer of the separator obtained from Comparative Example 1.

Particularly, the conductive coating layer was prepared as follows.

Single-walled carbon nanotubes, polyvinyl pyrrolidone as a second binder polymer, and tannic acid (TA) as a dispersant were introduced to water as a solvent at a weight ratio controlled to 45 : 45 : 10 to prepare slurry for forming a conductive coating layer. Herein, the slurry had a solid content (slurry free from the solvent) of 2 parts by weight based on 100 parts by weight of the slurry.

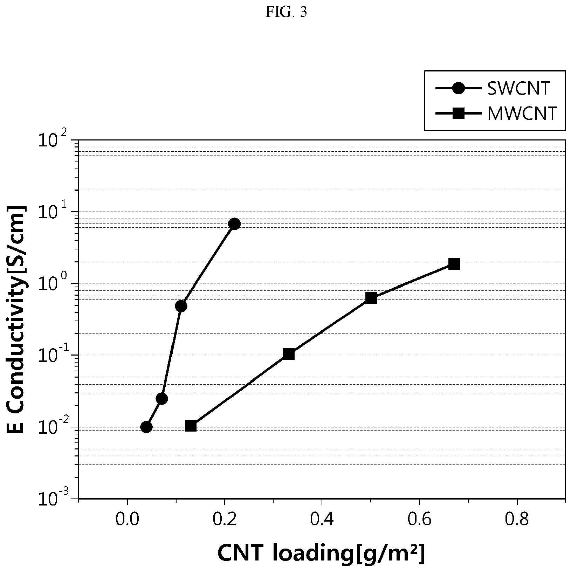

The slurry for forming a conductive coating layer was applied to any one of the two porous coating layers formed as described above through a slot-die coating process at room temperature, followed by drying, to obtain a separator having a conductive coating layer formed thereon. Herein, the loading amount of single-walled carbon nanotubes coated actually in the conductive coating layer was 0.22 g/m$^2$. The test results of the separator are shown in Table 1, Table 2 and FIG. 3.

### Examples 2-4

A separator was obtained in the same manner as Example 1, except that the loading amount of single-walled carbon nanotubes coated actually in the conductive coating layer was controlled as shown in Table 1. The test results of each separator are shown in Table 1 and FIG. 3.

**Comparative Examples 2-5**

A separator was obtained in the same manner as Example 1, except that multi-walled carbon nanotubes (MWCNTs) were used instead of single-walled carbon nanotubes, the solid content was controlled to 4 wt%, and the loading amount of multi-walled carbon nanotubes was controlled as shown in Table 1. Herein, the slurry for forming a conductive coating layer was controlled to have a weight ratio of multi-walled carbon nanotubes : second binder polymer : dispersant of 80 : 10 : 10. The test results of each separator are shown in Table 1 and FIG. 3.

[Table 1]

| | Comp. Ex.1 | Ex.1 | Ex.2 | Ex.3 | Ex.4 | Comp. Ex. 2 | Comp. Ex. 3 | Comp. Ex. 4 | Comp. Ex. 5 |
|---|---|---|---|---|---|---|---|---|---|
| CNT type | - | SWCNT | | | | MWCNT | | | |
| Actually coated CNT loading (g/m$^2$) | - | 0.22 | 0.11 | 0.07 | 0.04 | 0.67 | 0.5 | 0.33 | 0.17 |
| Electroconductivity (S/cm) | - | 6.7 | 0.48 | 0.025 | 0.01 | 1.85 | 0.62 | 0.1 | 0.01 |
| Increase/decrease in cell resistance (%) (SOC50, 2.5 C, 10 sec) | - | -17.7 | -13.4 | | -12.3 | -3.4 | -1.7 | -0.9 | -1.3 |
| Increase/decrease in 2 C discharge capacity (%) | - | 31.7 | 29.9 | | 28.8 | -3.5 | -5.7 | -5.3 | -6.3 |

**Method for Determination of Electrical Conductivity**

The electrical conductivity of a separator was determined by using a surface resistance analyzer (Auto 4-Point Probe System, Model No: CMT-SR2000N, available from AiT Co.). Particularly, each of the separators according to Examples 1-4 and Comparative Examples 1-5 was sampled into a size of 5 cm × 5 cm, and the thickness of the sample was measured. Then, the sample was inserted to the surface resistance analyzer, and the measured thickness was input to the system to determine the surface resistance. Herein, the electrical conductivity was expressed in the unit of $\Omega \times$ cm, and the measurement was converted into its reciprocal number to determine the electrical conductivity.

**Method for Calculating Increase/Decrease in Cell Resistance**

The cell resistance of Comparative Example 1 was taken as a criterion, and the increase/decrease in cell resistance of each separator was calculated according to the following Formula 1:

[Formula 1]

(Resistance of separator to be tested – Resistance of Comparative Example 1) /

(Resistance of Comparative Example 1) X 100

In Table 1, when the absolute value of increase/decrease in cell resistance of a separator, expressed by a negative number, is increased, the separator shows lower resistance. In other words, the separator shows a higher effect of reducing resistance.

**Method for Calculating Increase/Decrease in 2 C-Rate Discharge Capacity**

The discharge capacity of Comparative Example 1 at 2 C-rate was taken as a criterion, and the increase/decrease in 2 C-rate discharge capacity of each separator was calculated according to the following Formula 2:

[Formula 2]

(Discharge capacity at 2 C-rate of cell to be tested - Discharge capacity at 2 C-rate of cell

according to Comparative Example 1) / (Discharge capacity at 2 C-rate of cell according to

Comparative Example 1) X 100

In Table 1, when the absolute value of increase/decrease in discharge capacity of a cell, expressed by a positive number, is increased, the cell shows a higher effect of increasing discharge capacity.

As can be seen from Table 1, Examples 1 and 2 provided with a conductive coating layer show a significantly reduced cell resistance as determined from the increase/decrease in cell resistance of -17.7% and -13.4%, respectively, based on Comparative Example 1. In addition, Examples 1 and 2 show a significantly increased discharge capacity as determined from the increase/decrease in discharge capacity at 2 C-rate of 31.7% and 29.9%, respectively, based on Comparative Example 1. Particularly, when comparing Example 4 with Comparative Example 5, there is a significantly large difference in increase/decrease in cell resistance and increase/decrease in discharge capacity despite the same electrical conductivity of 0.01 S/cm.

As a result, it can be seen that the separator using single-walled carbon nanotubes according to an embodiment of the present disclosure ensures improved high-rate discharge characteristics and output/life characteristics as compared to the separator using multi-walled carbon nanotubes.

**Test Example 2**

**Example 5**

A conductive coating layer was formed on the separator obtained according to Comparative Example 1.

Particularly, the conductive coating layer was prepared as follows.

Single-walled carbon nanotubes, polyvinyl pyrrolidone as a second binder polymer, tannic acid (TA) as a dispersant and styrene butadiene rubber (SBR) as a particle-type binder polymer were introduced to water as a solvent at a weight ratio controlled to 10.8 : 10.7 : 2.5 : 76 to prepare slurry for forming a conductive coating layer. Herein, the slurry had a solid content (slurry free from the solvent) of 1.5 parts by weight based on 100 parts by weight of the slurry.

The slurry for forming a conductive coating layer was applied to any one of the two porous coating layers formed as described above through a slot-die coating process at room temperature, followed by drying, to obtain a separator having a conductive coating layer formed thereon. Herein, the loading amount of single-walled carbon nanotubes coated actually in the conductive coating layer was 0.2 $g/m^2$. The test results of the separator are shown in the following Table 2.

[Table 2]

|  | Comp. Ex.1 | Ex. 1 | Ex. 5 |
|---|---|---|---|
| CNT type | - | SWCNT | |
| Actually coated CNT loading (g/$m^2$) | - | 0.22 | 0.2 |
| Adhesion to electrode (gf/25mm) | 82 | 5 | 87 |
| Electroconductivity (S/cm) | - | 6.7 | 4.3 |

As can be seen from Example 1 in Table 2, when using single-walled carbon nanotubes for a conductive coating layer, electroconductivity is increased. In addition, it can be seen that when a particle-type binder polymer is further incorporated, in the case of Example 5, both electroconductivity and adhesion to an electrode are improved. On the contrary, when any conductive coating layer itself is not present, in the case of Comparative Example 1, it is not possible to measure electroconductivity itself.

**Test Example 3**

**Example 6**

A conductive coating layer was formed on the separator obtained according to Comparative Example 1.

Particularly, the conductive coating layer was prepared as follows.

Single-walled carbon nanotubes, polyvinyl pyrrolidone as a second binder polymer, and tannic acid (TA) as a dispersant were introduced to water as a solvent at a weight ratio controlled to 45 : 45 : 10 to prepare slurry for forming a conductive coating layer. Herein, the slurry had a solid content (slurry free from the solvent) of 2 parts by weight based on 100 parts by weight of the slurry.

The slurry for forming a conductive coating layer was applied to any one of the two porous coating layers formed as described above through a slot-die coating process at room temperature, followed by drying, to obtain a separator having a conductive coating layer formed thereon. Herein, the loading amount of single-walled carbon nanotubes coated actually in the conductive coating layer was 0.46 g/m$^2$. The test results of the separator are shown in the following Table 3.

**Comparative Example 6**

A conductive coating layer was formed on the separator obtained according to Comparative Example 1.

Particularly, the conductive coating layer was prepared as follows.

Single-walled carbon nanotubes, polyvinyl pyrrolidone as a second binder polymer, and tannic acid (TA) as a dispersant were introduced to water as a solvent at a weight ratio controlled to 45 : 45 : 10 to prepare slurry for forming a conductive coating layer. Herein, the slurry had a solid content (slurry free from the solvent) of 2 parts by weight based on 100 parts by weight of the slurry.

The slurry for forming a conductive coating layer was applied to any one of the two porous coating layers formed as described above through a slot-die coating process at room temperature, followed by drying, to obtain a separator having a conductive coating layer formed thereon. Herein, the loading amount of single-walled carbon nanotubes coated actually in the conductive coating layer was 0.55 g/m$^2$. The test results of the separator are shown in the following Table 3.

[Table 3]

| | Comp. Ex. 1 | Ex. 6 | Comp. Ex. 6 |
|---|---|---|---|
| CNT type | - | SWCNT | SWCNT |
| Actually coated CNT loading (g/m$^2$) | - | 0.46 | 0.55 |
| Air permeability (s/100 cc) | 190 | 220 | 6300 |
| Dielectric breakdown voltage (kV) | 1.5 | 0.98 | 0.22 |
| Ratio of battery short-circuit generation (number of batteries causing short-circuit/ total number of batteries) | 0/8 | 0/8 | 5/8 |

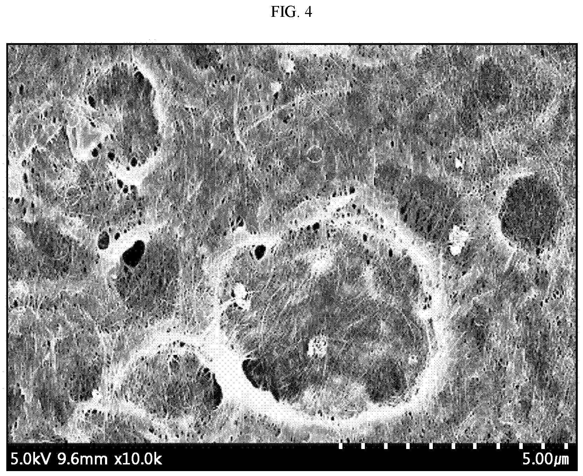

As can be seen from Table 3, when SWCNT loading amount is larger than 0.5 g/m$^2$, air permeation time is increased rapidly, and dielectric breakdown voltage is decreased. Meanwhile, FIG. 4 is an SEM image illustrating the surface of the separator having a conductive coating layer according to Example 6, and FIG. 5 is an SEM image illustrating the surface of the separator having a conductive coating layer according to Comparative Example 6. It can be seen from the images that the pores are blocked in the case of Comparative Example 6 using a higher loading amount of SWCNT, because SWCNT is coated on the whole surface of the separator.

**Test Methods**

1) Method for Determining Thickness

The thickness of each separator was determined by using a thickness gauge (VL-50S-B, available from Mitutoyo).

2) Method for Determining Adhesion (Lami Strength) between Electrode and Separator

To determine the adhesion (Lami strength) between an electrode and a separator, a negative electrode was prepared as follows.

First, artificial graphite, carbon black, carboxymethyl cellulose (CMC) and styrene butadiene rubber (SBR) were mixed at a weight ratio of 96 : 1 : 2 : 2 with water to prepare negative electrode slurry. The negative electrode slurry was applied to copper (Cu) foil at a capacity of 3.5 mAh/cm$^2$ and dried at 130°C for 3 hours or more, followed by pressing, to obtain a negative electrode.

The resultant negative electrode was cut into a size of 25 mm × 100 mm. In addition, each of the separators obtained according to Examples and Comparative Examples was cut into a size of 25 mm × 100 mm. The separator was stacked with the negative electrode, and the stack was inserted between PET films having a thickness of 100 $\mu$m and adhered by using a flat press. Herein, the flat press was heated and pressurized at 60°C under a pressure of 6.5 MPa for 1 second. The adhered separator and negative electrode were attached to slide glass by using a double-sided tape. The end portion (10 mm or less from the end of the adhered surface) of the separator was peeled off and attached to a 25 mm × 100 mm PET film by using a single-sided tape so that they might be connected in the longitudinal direction. Then, the slide glass was mounted to the lower holder of a UTM instrument (LLOYD Instrument LF Plus), and the PET film adhered to the separator was mounted to the upper holder of the UTM instrument. Then, force was applied at 180° and a rate of 300 mm/min. The force required for separating the negative electrode from the porous coating layer facing the negative electrode was measured.

3) Air Permeability

The air permeability of each separator was determined by using a Gurley type air permeability tester according to JIS P-8117. Herein, the air permeability was determined as time required for 100 cc of air to pass through an area of 645 mm$^2$ and a diameter of 28.6 mm. The air permeation time was recorded as average of values determined at 3 points including 1 point of each of the left side/center/right side of a sample.

4) Dielectric Breakdown Voltage

The dielectric breakdown voltage was measured by using AC/DC/IR Hi-Pot tester (Model 19052, Chroma). Pressing jigs made of aluminum were used, herein the upper jig was 30 mmR, and the lower jig was 55 × 105 mm$^2$. Each jig was surface-coated with a material of Teflon.

The first sheet of aluminum foil, separator and the second sheet of aluminum foil were stacked on the lower jig, and the upper jig was disposed thereon to determine the dielectric breakdown voltage. Each of the first sheet and the second sheet of aluminum foil had a thickness of 15 $\mu$m, the first aluminum foil had a size of 65 × 115 mm$^2$, and the second sheet of aluminum foil had a size of 40 × 40 mm$^2$.

Then, the voltage was increased from DC 0 V at a rate of 100 V/s, each sample was determined whether it failed or not, while maintaining an electric current at 0.5 mA or more for 3 seconds, and the voltage value was checked in the case of a failed sample.

5) Determination of Battery Short-Circuit

After manufacturing batteries, non-operated batteries or batteries showing a discharge capacity reduced by 20% or more based on the theoretical capacity were checked, while the batteries were discharged at 1 C-rate. For example, when the theoretical capacity was 100 mA, a battery realizing a capacity of 70 mAh was judged as one generating a short-circuit.

**Claims**

1. A separator for a lithium secondary battery, comprising:

   a porous polymer substrate;
   a porous coating layer formed merely on the first surface of the porous polymer substrate or formed on both the first surface and the second surface of the porous polymer substrate, and comprising a plurality of inorganic particles and a first binder polymer disposed totally or partially on the surfaces of the inorganic particles so that the inorganic particles are interconnected and fixed; and
   a conductive coating layer formed on the first surface of the porous coating layer and comprising a conductive material and a second binder polymer,
   wherein the loading amount of the conductive material in the conductive coating layer is 0.01-0.5 g/m$^2$, and the conductive material comprises single-walled carbon nanotubes (SWCNTs) in an amount of 90 wt% or more based on 100 wt% of the conductive material.

2. The separator for a lithium secondary battery according to claim 1, wherein the conductive material comprises single-walled carbon nanotubes (SWCNTs) in an amount of 99 wt% or more based on 100 wt% of the conductive material.

3. The separator for a lithium secondary battery according to claim 1, wherein the conductive coating layer is a thin film and has a thickness of 2 $\mu$m or less.

4. The separator for a lithium secondary battery according to claim 1, wherein the single-walled carbon nanotubes have a diameter of 0.1-10 nm.

5. The separator for a lithium secondary battery according to claim 1, wherein each of the first binder and the second binder independently is any one selected from the group consisting of polyvinylidene fluoride-co-hexafluoropropylene, polyvinylidene fluoride-co-trichloroethylene, polymethyl methacrylate, polyethylhexyl acrylate, polybutyl acrylate, polyacrylonitrile, polyvinyl pyrrolidone, polyvinyl acetate, polyethylene-co-vinyl acetate, polyethylene oxide, polyarylate, cellulose acetate, cellulose acetate butyrate, cellulose acetate propionate, cyanoethylpullulan, cyanoethylpolyvinyl alcho1, cyanoethyl cellulose, cyanoethyl sucrose, pullulan, and carboxymethyl cellulose, or a mixture of two or more of them.

6. The separator for a lithium secondary battery according to claim 1, wherein the conductive coating layer further comprises a particle-type binder polymer.

7. The separator for a lithium secondary battery according to claim 6, wherein the particle-type binder polymer has a glass transition temperature of 80°C or less.

8. The separator for a lithium secondary battery according to claim 6, wherein the particle-type binder polymer has an average diameter (D50) of 100-500 nm.

9. The separator for a lithium secondary battery according to claim 6, wherein the particle-type binder polymer comprises any one selected from the group consisting of styrene butadiene rubber (SBR), acrylonitrile-butadiene rubber, acrylonitrile-butadiene-styrene rubber, acrylic copolymer, polyacrylonitrile, polyvinyl chloride, polyvinylidene fluoride, polyvinyl alcohol, polystyrene and polycyanoacrylate, or a mixture of two or more of them.

10. The separator for a lithium secondary battery according to claim 1, wherein the weight ratio of the conductive material to the second binder polymer is 40 : 60-99 : 1.

11. The separator for a lithium secondary battery according to claim 1, wherein the porous coating layer has a thickness of 1-10 $\mu$m.

12. A lithium secondary battery comprising a positive electrode, a negative electrode and a separator interposed between the positive electrode and the negative electrode, wherein the separator is the same as defined in any one of claims 1 to 11, and the conductive coating layer in the separator faces the positive electrode.

13. The lithium secondary battery according to claim 12, wherein the positive electrode is a high-loading positive electrode having a positive electrode active material loading amount of 5 mAh/cm$^2$ or more.

FIG. 1

x 20,000    5.0kV   SEI       SEM      WD 7.8mm

FIG. 2

FIG. 3

FIG. 4

5.0kV 9.6mm x10.0k      5.00μm

FIG. 5

5.0kV 10.0mm x20.0k                              2.00μm

FIG. 6

30
21
10
22

| | INTERNATIONAL SEARCH REPORT | International application No. |
|---|---|---|
| | | **PCT/KR2021/014630** |

**A.    CLASSIFICATION OF SUBJECT MATTER**

**H01M 50/431**(2021.01)i; **H01M 50/446**(2021.01)i; **H01M 50/449**(2021.01)i; **H01M 10/058**(2010.01)i; **H01M 10/052**(2010.01)i

According to International Patent Classification (IPC) or to both national classification and IPC

**B.    FIELDS SEARCHED**

Minimum documentation searched (classification system followed by classification symbols)

H01M 50/431(2021.01); B32B 18/00(2006.01); H01G 11/52(2013.01); H01M 10/052(2010.01); H01M 2/16(2006.01); H01M 50/40(2021.01); H01M 50/409(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 분리막(separator), 바인더(binder), 다공성 코팅층(porous coating layer), 전도성 코팅층(conductive coating layer), 탄소나노튜브(carbon nanotube), 함량(content)

**C.    DOCUMENTS CONSIDERED TO BE RELEVANT**

| Category* | Citation of document, with indication, where appropriate, of the relevant passages | Relevant to claim No. |
|---|---|---|
| Y | KR 10-2013-0011973 A (LG CHEM, LTD.) 30 January 2013 (2013-01-30) See claims 1, 6, 10, 15-16 and 18 and figures 1-4. | 1-13 |
| Y | KR 10-2017-0093606 A (LG CHEM, LTD.) 16 August 2017 (2017-08-16) See claims 2-3 and 6. | 1-13 |
| Y | KR 10-2020-0078408 A (LG CHEM, LTD.) 01 July 2020 (2020-07-01) See paragraphs [0070] and [0108] and claims 3-4. | 6-9 |
| Y | KR 10-2019-0025462 A (LG CHEM, LTD.) 11 March 2019 (2019-03-11) See paragraph [0132]. | 13 |
| A | JP 6205375 B2 (TREOFAN GERMANY GMBH & CO., KG.) 27 September 2017 (2017-09-27) See claims 1 and 10. | 1-13 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **04 February 2022** | **04 February 2022** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2021/014630**

| Patent document cited in search report | | | Publication date (day/month/year) | Patent family member(s) | | | Publication date (day/month/year) |
|---|---|---|---|---|---|---|---|
| KR | 10-2013-0011973 | A | 30 January 2013 | CN | 103493253 | A | 01 January 2014 |
| | | | | CN | 103493253 | B | 13 July 2016 |
| | | | | EP | 2736093 | A2 | 28 May 2014 |
| | | | | EP | 2736093 | B1 | 10 January 2018 |
| | | | | JP | 2014-512650 | A | 22 May 2014 |
| | | | | JP | 5834322 | B2 | 16 December 2015 |
| | | | | KR | 10-1283487 | B1 | 12 July 2013 |
| | | | | TW | 201320446 | A | 16 May 2013 |
| | | | | TW | I467833 | B | 01 January 2015 |
| | | | | US | 2013-0244082 | A1 | 19 September 2013 |
| | | | | US | 9287545 | B2 | 15 March 2016 |
| | | | | WO | 2013-012292 | A2 | 24 January 2013 |
| | | | | WO | 2013-012292 | A3 | 04 April 2013 |
| KR | 10-2017-0093606 | A | 16 August 2017 | None | | | |
| KR | 10-2020-0078408 | A | 01 July 2020 | CN | 112020784 | A | 01 December 2020 |
| | | | | EP | 3800700 | A1 | 07 April 2021 |
| | | | | US | 2021-0028428 | A1 | 28 January 2021 |
| | | | | WO | 2020-130723 | A1 | 25 June 2020 |
| KR | 10-2019-0025462 | A | 11 March 2019 | KR | 10-2327226 | B1 | 15 November 2021 |
| JP | 6205375 | B2 | 27 September 2017 | CA | 2866600 | A1 | 12 September 2013 |
| | | | | CN | 104137299 | A | 05 November 2014 |
| | | | | CN | 104137299 | B | 27 February 2018 |
| | | | | DE | 102012004161 | A1 | 05 September 2013 |
| | | | | EP | 2823519 | A1 | 14 January 2015 |
| | | | | EP | 2823519 | B1 | 09 August 2017 |
| | | | | ES | 2645958 | T3 | 11 December 2017 |
| | | | | HU | E037260 | T2 | 28 August 2018 |
| | | | | JP | 2015-511053 | A | 13 April 2015 |
| | | | | KR | 10-2015-0018495 | A | 23 February 2015 |
| | | | | MX | 2014010626 | A | 05 December 2014 |
| | | | | PL | 2823519 | T3 | 31 January 2018 |
| | | | | US | 10033070 | B2 | 24 July 2018 |
| | | | | US | 2015-0093627 | A1 | 02 April 2015 |
| | | | | WO | 2013-131624 | A1 | 12 September 2013 |

Form PCT/ISA/210 (patent family annex) (July 2019)

**EP 4 170 806 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020200135562